# EUROPÄISCHE PATENTSCHRIFT

(11) **EP 1 986 833 B1**
(45) Veröffentlichungstag und Bekanntmachung des Hinweises auf die Patenterteilung: **20.10.2010**
(21) Anmeldenummer: 07704709.0
(22) Anmeldetag: 26.02.2007
(51) Int. Cl.: B29C 44/04, B60R 13/08

(54) **VERBESSERTES VERFAHREN ZUR HERSTELLUNG EINER LEICHTEN, SCHALLISOLIERENDEN VERKLEIDUNG FÜR KRAFTFAHRZEUGE UND ENTSPRECHENDE VERKLEIDUNG**
IMPROVED METHOD FOR PRODUCING A LIGHTWEIGHT, SOUND-INSULATING COVERING FOR MOTOR VEHICLES AND CORRESPONDING COVERING
PROCÉDÉ AMÉLIORÉ POUR LA FABRICATION D'UN REVÊTEMENT D'ISOLATION PHONIQUE LÉGER POUR LES VÉHICULES AUTOMOBILES ET REVÊTEMENT CORRESPONDANT

(30) Priorität: 24.02.2006 DE 102006009134
(43) Veröffentlichungstag der Anmeldung: 05.11.2008
(73) Patentinhaber: Carcoustics TechConsult GmbH, 51381 Leverkusen (DE); Bayer MaterialScience AG, 51368 Leverkusen (DE)
(72) Erfinder: SOLTAU, Dirk, 40479 Düsseldorf (DE); HANSEN, Michael, 50735 Köln (DE); GRUNA, Monika, 51373 Leverkusen (DE); GROSS, Thomas, 42929 Wermelskirchen (DE)
(74) Vertreter: Cohausz & Florack
(86) Internationale Anmeldenummer: PCT/EP2007/051785
(87) Internationale Veröffentlichungsnummer: WO 2007/096427

(56) Entgegenhaltungen:
- DE-A1- 1 779 128
- DE-A1- 2 735 153
- DE-A1- 3 724 680

## Beschreibung

Die Erfindung betrifft ein Verfahren zur Herstellung einer leichten, schallisolierenden Verkleidung für ein Karosserieteil eines Kraftfahrzeuges sowie eine solche Verkleidung, insbesondere in Form einer im Fahrgastraum anzuordnenden Stirnwandverkleidung.

Herkömmliche Stirnwandverkleidungen für Kraftfahrzeuge sind aus einer schalldämmenden Schwerschicht und einer Schaumstofflage oder textilen Vlieslage aufgebaut, wobei die Schaumstoff- oder Vlieslage als elastische Feder und die Schwerschicht als Masse eines akustischen Feder-Masse-Systems wirken. Das Flächengewicht derartiger Stirnwandverkleidungen liegt üblicherweise im Bereich oberhalb von 2 kg/m².

Aus der DE 27 35 153 A1 ist ein spezifisch leichtes, als Doppelmatte ausgebildetes Feder-Masse-System bekannt, das aus offenporigem Polyurethan-Weichschaum und einer Deckschicht aus gefülltem Polyurethan-Schwerschaum besteht und insbesondere als Stirnwandverkleidung eines Kraftfahrzeuges bestimmt ist. Der Polyurethan-Schwerschaum ist dabei als Integralschaum ausgeführt, weist eine Shore-Härte A von 80 bis 90 auf und enthält einen zusätzlichen Füllstoffanteil von 400 bis 500 Gew.-%. Zur Realisierung des genannten Härtegrades der Deckschicht wird eine Polyolmischung aus handelsüblichem Hartschaumpolyol und handelsüblichem weichschaumpolyol verwendet. Die Deckschicht und die Polyurethan-Weichschaumschicht sind durch Hinterschäumen miteinander verbunden, wobei die Deckschicht in eine Form eingelegt und mit dem Polyurethan-weichschaum hinterschäumt wird. Die Herstellung dieser bekannten Doppelmatte ist relativ zeit- und kostenaufwendig.

Der vorliegenden Erfindung liegt die Aufgabe zugrunde, eine schalldämmende sowie schallabsorbierende Verkleidung, insbesondere eine Stirnwandverkleidung für Kraftfahrzeuge bereitzustellen, die ein geringes Gewicht aufweist und sich relativ kostengünstig realisieren lässt. Zugleich soll ein Verfahren zur kostengünstigen Herstellung einer solchen schallisolierenden Verkleidung angegeben werden.

Hinsichtlich des Herstellungsverfahrens wird diese Aufgabe erfindungsgemäß durch ein Verfahren mit den Merkmalen des Anspruchs 1 gelöst.

Das erfindungsgemäße Verfahren ist **dadurch gekennzeichnet, dass** die Verkleidung als geschäumtes, schallabsorbierendes Formteil in einem einstufigen Arbeitsgang durch Einspritzen einer Polyol und Isocyanat enthaltenden Reaktionsmischung in eine Kavität eines Schäumwerkzeuges erzeugt wird, wobei vor und/oder während des Einspritzens mindestens ein vorbestimmter, die Kavität begrenzender Oberflächenbereich des Schäumwerkzeuges so temperiert wird, dass das geschäumte Formteil auf einer Seite eine integrale, im wesentlichen porenfreie Haut mit einer Dicke von mindestens 0,5 mm und auf seiner der besagten Haut gegenüberliegenden Seite eine offenporige Oberfläche und/oder dünnere, schalldurchlässige Haut aufweist.

Beispielsweise wird das Schäumwerkzeug so temperiert, dass zwischen dessen Oberflächenbereichen, an welchen die integrale, im wesentlichen porenfreie Haut einerseits und die offenporige Oberfläche und/oder dünnere, schalldurchlässige Haut andererseits erzeugbar sind, eine Temperaturdifferenz von mindestens 15°C, vorzugsweise mindestens 25°C herrscht.

Mit dem erfindungsgemäßen Verfahren lassen sich aus nur einer Reaktionsmischung, ohne Wechsel der oberen oder unteren Werkzeughälfte, in einem einstufigen Arbeitsgang leichte schallisolierende Verkleidungen herstellen, die sowohl schalldämmend als auch schallabsorbierend wirken. Die erhaltenen Verkleidungen reduzieren den Schallpegel im Fahrgastinnenraum erheblich und verbessern somit den Fahrkomfort des damit ausgerüsteten Kraftfahrzeuges. Andererseits erhöhen sie das Gewicht des Kraftfahrzeuges nur wenig, was für eine hohe Fahrleistung, insbesondere Beschleunigung des betreffenden Kraftfahrzeuges und einen niedrigen Kraftstoffverbrauch von Vorteil ist.

Im Vergleich zu dem aus der DE 27 35 153 A1 bekannten Verfahren ist beim erfindungsgemäßen Verfahren die Anzahl der benötigten Materialkomponenten reduziert. Die Reduzierung bzw. Minimierung der verwendeten Materialkomponenten ist von Vorteil hinsichtlich der Materialbevorratung und der Materialkosten. Denn somit sind entsprechend weniger Vorratsbehälter und zugehörige Anlagenteile erforderlich. Auch lassen sich beim Einkauf größerer Mengen einer oder weniger Materialkomponenten in der Regel eher bzw. höhere Mengenrabatte erzielen als beim Kauf entsprechender Mengen, die eine höhere Anzahl von Materialkomponenten umfassen.

Das erfindungsgemäße Herstellungsverfahren erfordert zudem nur relativ geringe Investitionskosten, da es keinen Wechsel der oberen und/oder unteren Formhälfte des Schäumwerkzeuges vorsieht.

Des weiteren zeichnen sich nach dem erfindungsgemäßen Verfahren hergestellte Verkleidungen durch günstige Recycling-Eigenschaften aus, da sie aus einer einzigen Reaktionsmischung hergestellt werden.

Eine bevorzugte optionale Ausgestaltung des erfindungsgemäßen Verfahrens ist **dadurch gekennzeichnet, dass** der aus Polyol und Isocyanat gebildeten Reaktionsmischung vor dem Einspritzen in das Schäumwerkzeug Füllstoff, vorzugsweise Bariumsulfat und/oder Calciumcarbonat zugegeben wird. Durch die Zugabe von Füllstoff lassen sich die Materialkosten der Verkleidung erheblich reduzieren. In diesem Zusammenhang wird ferner vorgeschlagen, den Füllstoff (Bariumsulfat und/oder Calciumcarbonat) mit Kohlendioxid zu kombinieren. Durch diese Kombination lässt sich eine weitere Kostenoptimierung erreichen.

Mitunter ist es vorteilhaft, wenn die integrale, im wesentlichen porenfreie Haut des geschäumten Formteils außenseitig mit einer Abdeckschicht versehen ist. Durch die Abdeckschicht können die mechanische Festigkeit, die Schalldämmwirkung, das Schallabsorptionsvermögen und/oder das Aussehen des geschäumten Formteils verbessert werden. Eine weitere Ausgestaltung des erfindungsgemäßen Verfahrens sieht daher vor, dass in das Schäumwerkzeug ein Materialbahnabschnitt oder Zuschnitt einer Kunststofffolie, insbesondere einer Schaumstofffolie, oder eines Faservlieses, insbesondere eines Volumenvlieses, an den mindestens einen Oberflächenbereich, an welchem die integrale, im wesentlichen porenfreie Haut des geschäumten Formteils erzeugbar ist, eingelegt und mit der Polyol und Isocyanat enthaltenden Reaktionsmischung hinterspritzt wird. Auf diese Weise lässt sich das geschäumte Formteil zuverlässig und kostengünstig mit der Abdeckschicht verbinden.

Hinsichtlich der angestrebten Verkleidung wird die oben angegebene Aufgabe erfindungsgemäß durch eine Verkleidung mit den Merkmalen des Anspruchs 11 gelöst.

Die erfindungsgemäße Verkleidung besteht im wesentlichen aus einem in einem einstufigen Prozess geschäumten, schallabsorbierenden Formteil aus offenzelligem Polyurethan-Weichschaum, welches auf seiner einen Seite eine integrale, im wesentlichen porenfreie Haut mit einer Dicke von mindestens 0,5 mm aufweist und auf seiner der besagten Haut gegenüberliegenden Seite eine offenporige Oberfläche und/oder dünnere, schalldurchlässige Haut aufweist. Die im wesentlichen porenfreie Haut wirkt schalldämmend, während der übrige Teil des geschäumten Formteils schallabsorbierende Eigenschaften hat. Die Position, Flächengröße und/oder Dicke der im wesentlichen porenfreien Haut wird in Abhängigkeit der akustischen Gegebenheiten und Erfordernisse gezielt dimensioniert. Die erfindungsgemäße Verkleidung kann bei Bedarf mehrere integrale, voneinander beabstandete, im wesentlichen porenfreie Hautbereiche aufweisen.

Da die erfindungsgemäße Verkleidung insbesondere als innere Stirnwandverkleidung vorgesehen ist, kann sie gegebenenfalls einen oder mehrere Durchbrüche zur Anordnung bzw. Hindurchführung von Aggregaten wie einer Pedalarie, einer Lenksäule, Kabeln und/oder Fluidleitungen aufweisen. Bezüglich eines solchen Durchbruchs ist nach einer bevorzugten Ausgestaltung der erfindungsgemäßen Verkleidung vorgesehen, dass ein Ende des Durchbruchs mit Abstand von der integralen, im wesentlichen porenfreien Haut des schallabsorbierenden Formteils umgeben ist und zwischen dieser Haut und dem Durchbruch eine offenporige Oberfläche und/oder dünnere, schalldurchlässige Haut ausgebildet ist. Es wurde gefunden, dass sich hierdurch eine optimierte Schallabsorption an dem Durchbruch erzielen lässt.

In einer weiteren bevorzugten Ausgestaltung der erfindungsgemäßen Verkleidung ist vorgesehen, dass die im wesentlichen porenfreie Haut am Rand der Verkleidung eine flexible Dichtlippe bildet. Die flexible Dichtlippe gleicht eventuelle Fertigungstoleranzen aus und stellt so eine optimale Anpassung der Verkleidung an angrenzende Bauteile bzw. Karosserieabschnitte sicher. Hierdurch wird die schalldämmende Wirkung der erfindungsgemäßen Verkleidung optimiert.

Weitere bevorzugte und vorteilhafte Ausgestaltungen der erfindungsgemäßen Verkleidung und des Verfahrens zu ihrer Herstellung sind in den Unteransprüchen angegeben.

Nachfolgend wird die Erfindung anhand einer mehrere Ausführungsbeispiele darstellenden Zeichnung näher erläutert. Es zeigen schematisch:
- Fig. 1: eine Schnittansicht des vorderen Abschnitts eines Kraftfahrzeuges mit einer innenseitig an der den Fahrgastraum vom Motorraum trennenden Stirnwand angeordneten Stirnwandverkleidung;
- Fig. 2: eine gegenüber der Fig. 1 vergrößerte Schnitt- ansicht einer Stirnwandverkleidung;
- Fig. 3: eine Schnittansicht eines Abschnitts einer erfindungsgemäßen Verkleidung gemäß einem zweiten Ausführungsbeispiel;
- Fig. 4: eine weitere Schnittansicht eines Abschnitts einer erfindungsgemäßen Verkleidung;
- Fig. 5: eine Schnittansicht eines Schäumwerkzeuges zur Herstellung einer erfindungsgemäßen Verkleidung;
- Fig. 6: eine Schnittansicht eines weiteren Schäumwerk- zeuges zur Herstellung einer erfindungsgemäßen Verkleidung;
- Fig. 7: eine Schnittansicht eines Abschnitts einer erfindungsgemäßen Verkleidung gemäß einem weiteren Ausführungsbeispiel; und
- Fig. 8: eine Schnittansicht eines Abschnitts einer erfindungsgemäßen Verkleidung gemäß einem weiteren Ausführungsbeispiel.

Die erfindungsgemäße schallisolierende Verkleidung ist vorzugsweise als innere Stirnwandverkleidung 1 für ein Kraftfahrzeug 2 ausgebildet. Sie kann jedoch grundsätzlich auch als schallisolierende Verkleidung für andere Karosserieteile eines Kraftfahrzeuges ausgebildet werden, z.B. als Unterbau eines Fahrzeugteppichs.

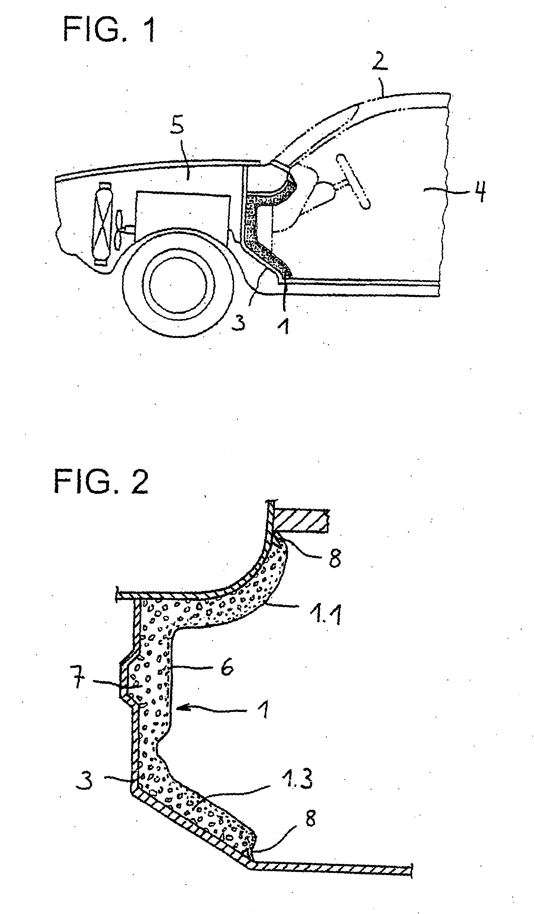

Wie in den Figuren 1 und 2 gezeigt, ist die Verkleidung 1 der Kontur der Stirnwand 3 angepasst, die den Fahrgastraum 4 vom Motorraum 5 trennt. Die Verkleidung 1 ist selbsttragend und zeichnet sich durch ein relativ geringes Gewicht aus. Ihr Gesamtflächengewicht beträgt vorzugsweise weniger als 900 g/m², beispielsweise weniger als 800 g/m². Sie wird als geschäumtes Formteil aus einer Polyol und Isocyanat enthaltenden Weichschaum-Reaktionsmischung in einem Schuss ("one-shot-process"), d.h. in einem einstufigen Arbeitsgang mittels eines Schäumwerkzeuges hergestellt.

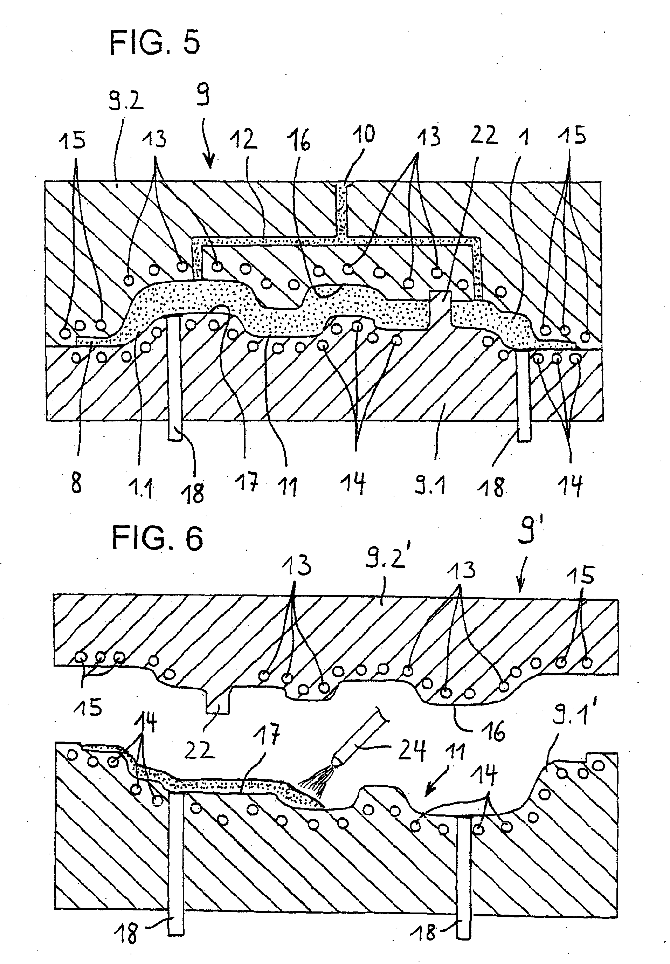

Zur Erläuterung des Herstellungsverfahrens wird insbesondere auf Fig. 5 Bezug genommen, in der ein mehrteiliges Schäumwerkzeug 9 schematisch dargestellt ist. Weitere Anlagenelemente, wie Lagertanks, Behälter mit Rührwerk, Pumpen, Rohrleitungen, ein Mischkopf, etc., sind der Übersichtlichkeit halber nicht dargestellt.

Die Hauptkomponenten (Isocyant und Polyol) der Reaktionsmischung werden aus Lagertanks in Arbeitsbehälter überführt, auf die erforderliche Temperatur gebracht und über Dosieraggregate einem einer Angussöffnung 10 des Schäumwerkzeuges 9 zugeordneten Mischkopf zugeleitet.

Der Reaktionsmischung bzw. deren Hauptkomponenten wird vorzugsweise Füllstoff zugegeben. Optional kann allerdings auch auf Füllstoff verzichtet werden. Als Füllstoff eignen sich beispielsweise Bariumsulfat und/oder Kreide. Der Füllstoff (BaSO₄ und/oder Kreide) wird dabei vorzugsweise mit CO₂ kombiniert. Durch die Zugabe von CO₂ lässt sich die Rohdichte der geschäumten Verkleidung reduzieren.

Das Schäumwerkzeug 9 weist eine untere Formhälfte 9.1 und eine obere Formhälfte 9.2 auf, die zusammen im geschlossenen Zustand des Werkzeuges eine dem herzustellenden Formteil entsprechende Kavität 11 definieren. Das Einspritzen der Reaktionsmischung in die Kavität 11 erfolgt über einen in der oberen Formhälfte 9.2 ausgebildeten Zufuhr- und Verteilerkanal 12. Das Schäumwerkzeug 9 ist mit einer Temperiervorrichtung versehen, die getrennt steuerbare, in den Formhälften 9.1, 9.2 integrierte Fluidkanäle 13, 14, 15 umfasst, mittels denen vorbestimmte, die Kavität begrenzende Oberflächenbereiche des Schäumwerkzeuges 9 gezielt temperiert (gekühlt) werden können.

Temperierung von Oberflächenbereichen des Schäumwerkzeuges bedeutet im vorliegenden Kontext eine relative Kühlung der betreffenden Oberflächenbereiche gegenüber der wärmeren Weichschaum-Reaktionsmischung.

Die obere Formhälfte 9.2 weist eine erste Gruppe von Fluidkanälen 13 auf, die an einer gemeinsamen, ein Fluid zuführenden Verteilerleitung (nicht gezeigt) und an einer gemeinsamen, das Fluid abführenden Sammelleitung (nicht gezeigt) angeschlossen sind. Die Temperatur des dieser Gruppe von Fluidkanälen 13 zugeführten Fluids ist so geregelt, dass die diesen Fluidkanälen 13 nächstliegende Werkzeugoberfläche 16 eine Temperatur im Bereich von 50°C bis 90°C, z.B. ca. 70°C ± 15°C aufweist bzw. sich dort eine Temperatur in diesem Bereich einstellt.

Die in der unteren Formhälfte 9.1 integrierten Fluidkanäle 14 bilden eine zweite Gruppe von Fluidkanälen, die an einer anderen gemeinsamen, ein Fluid zuführenden Verteilerleitung (nicht gezeigt) und an einer weiteren, dieses Fluid abführenden Sammelleitung (nicht gezeigt) angeschlossen sind, wobei die Temperatur des Fluids so geregelt wird, dass die der zweiten Gruppe von Fluidkanälen 14 nächstliegende Werkzeugoberfläche 17 der unteren Formhälfte 9.1 eine Temperatur im Bereich von 15°C bis 60°C, z.B. ca. 35°C ± 15°C aufweist bzw. sich dort eine Temperatur in diesem Bereich einstellt.

Die Temperaturdifferenz zwischen den Werkzeugoberflächen 16 und 17 beträgt mindestens 15°C, vorzugsweise mindestens 25°C.

Die Schaumstruktur des einlagigen Formteils 1 entsteht im wesentlichen durch die bei der chemischen Vernetzung der Reaktionsmischung entstehenden Treibgase. Das mit dem Füllstoff kombinierte CO₂ unterstützt dabei den Schäumvorgang.

Durch die relative Kühlung der Werkzeugoberfläche 17 der unteren Formhälfte 9.1 gegenüber der Werkzeugoberfläche 16 der oberen Formhälfte 9.2 wird der Schäumvorgang in der Reaktionsmischung in einem an die kältere Werkzeugoberfläche angrenzenden Bereich unterdrückt, so dass dort eine integrale, im wesentlichen porenfreie Haut 1.1 mit einer Dicke von mindestens 0,5 mm, vorzugsweise mindestens 0,8 mm, besonders bevorzugt mindestens 1 mm erzeugt wird. Die Haut 1.1 wirkt als schallisolierende Dämmschicht. Sie ist vorzugsweise luftdicht oder zumindest im wesentlichen luftdicht.

An der wärmeren Werkzeugoberfläche 16 der oberen Formhälfte 9.2 bildet sich dagegen durch den Schäumvorgang ein offenporiger Schallabsorber, der eine offenporige Oberfläche 1.2 oder lediglich eine sehr dünne Haut 1.4 aufweist, wobei diese dünne Haut jedoch schalldurchlässig bzw. schalltransparent ist.

Die schalldurchlässige Haut 1.4 hat eine Dicke von weniger als 400 µm, vorzugsweise weniger als 250 µm. Sie ist beispielsweise dünner als 150 µm und kann auch nur partiell ausgebildet sein.

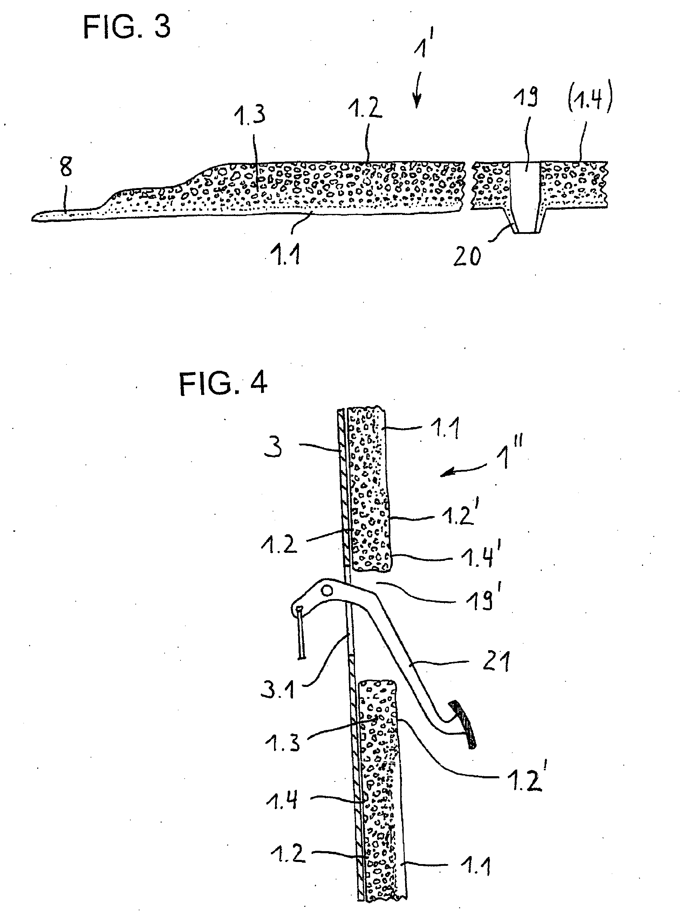

Die einstückige Verkleidung 1 weist bei Bedarf randseitig eine flexible Dichtlippe 8 auf, die eventuelle Fertigungstoleranzen ausgleichen kann und so eine dichte Anpassung der Verkleidung 1 an angrenzende Bauteile bzw. Karosserieabschnitte sicherstellt (vgl. Figuren 2 und 3).

Zur im wesentlichen porenfreien Ausgestaltung der Dichtlippe 8 sind in der oberen Formhälfte 9.2 nahe dem der Dichtlippe 8 entsprechenden Kavitätsabschnitt Fluidkanäle 15 vorgesehen, die ebenfalls an der der zweiten Gruppe von Fluidkanälen 14 zugeordneten Fluid-Verteilerleitung (nicht gezeigt) angeschlossen sind. Das die Fluidkanäle 14 und 15 durchströmende Fluid weist somit die gleiche Temperatur auf.

In der unteren Formhälfte 9.1 sind zudem Stößel 18 integriert, mittels denen das fertige Formteil, also die Verkleidung 1 nach Öffnen des Schäumwerkzeuges 9 ausgeworfen werden kann. Derartige Auswurfelemente 18 können erforderlichenfalls auch oder nur in der oberen Formhälfte 9.2 integriert sein.

Der offenporige, schallabsorbierende Anteil 1.3 der einlagigen Weichschaum-Verkleidung 1 weist eine Rohdichte im Bereich von 0,02 bis 0,06 g/cm³ auf. Die Rohdichte der im wesentlichen porenfreien, luftundurchlässigen Haut 1.1 liegt dagegen im Bereich von 0,08 bis 2,0 g/cm³, vorzugsweise im Bereich von 0,08 bis 1,4 g/cm³, insbesondere im Bereich von 0,1 bis 1,1 g/cm³.

In vielen schallisolierenden Verkleidungen für Karosserieteile müssen Durchbrüche ausgebildet werden, die beispielsweise der Hindurchführung von Kabeln, Schlauchleitungen und/oder mechanischen Aggregaten dienen. Wie in Fig. 3 gezeigt, ist an einem Durchbruch 19 für ein Kabel oder eine Schlauchleitung vorzugsweise eine elastisch aufweitbare Tülle 20 zur abgedichteten Hindurchführung des Kabels bzw. der Schlauchleitung (nicht gezeigt) auf der verhauteten Seite der einlagigen Verkleidung 1', also auf der die integrale, im wesentlichen porenfreie Haut 1.1 aufweisenden Seite ausgebildet.

In Fig. 4 ist in Schnittansicht ein Abschnitt einer Stirnwand 3 eines Kraftfahrzeuges mit einer einen Durchbruch 3.1 der Stirnwand durchgreifenden Pedalarie 21 schematisch dargestellt. Auf der Innenseite der Stirnwand 3 ist eine erfindungsgemäße Verkleidung 1" angeordnet, die einen Durchbruch 19' für die Pedalarie 21 aufweist. Die einlagige Stirnwandverkleidung 1" weist auf ihrer dem Fahrgastraum zugewandeten Seite die im wesentlichen porenfreie Haut 1.1 auf. Die als Dämmschicht wirkende Haut 1.1 umgibt den Durchbruch 19' mit Abstand. Zwischen der luftundurchlässigen Haut 1.1 und dem Durchbruch 19' ist ein offenporiger Oberflächenbereich 1.2' ausgebildet, der die schallabsorbierende Wirkung der Verkleidung 1" im Bereich des Durchbruchs 19' optimiert. Der offenporige Oberflächenbereich 1.2' umgibt den Durchbruch 19' beispielsweise ringförmig.

Wie in Fig. 5 gezeigt, kann das Schäumwerkzeug 9 mindestens einen in der Kavität 11 angeordneten Vorsprung 22 aufweisen, der beim Einspritzen der Reaktionsmischung einen Durchbruch 19' in dem entstehenden Formteil erzeugt. Ferner ist in Fig. 5 dargestellt, dass die Fluidkanäle 14 in der unteren Formhälfte 9.1 relativ weit von dem Vorsprung 22 beabstandet sind. Der Oberflächenbereich 17 des Schäumwerkzeuges 9, an welchem die integrale, im wesentlichen porenfreie Haut 1.1 des Formteils erzeugbar ist, umschließt den Vorsprung 22 dementsprechend mit einem bestimmten Abstand. Auf diese Weise wird - wie in Fig. 4 veranschaulicht - um den Durchbruch 19' herum ein offenporiger, ringförmiger Bereich 1.2' auf der im wesentlichen porenfrei verhauteten Seite der Verkleidung 1" belassen.

Fig. 6 zeigt schematisch ein weiteres Schäumwerkzeug 9' zur Herstellung einer erfindungsgemäßen Verkleidung. Im Unterschied zu dem Schäumwerkzeug gemäß Fig. 5 wird in diesem Fall die Weichschaum-Reaktionsmischung in eine offene Kavität eines aus unterer Formhälfte 9.1' und oberer Formhälfte 9.2' bestehenden Schäumwerkzeuges 9' eingebracht bzw. eingespritzt. Das Einbringen der Weichschaum-Reaktionsmischung erfolgt mittels einer Einspritzleitung 24, die vorzugsweise durch einen Roboter (nicht dargestellt) geführt wird. Nach dem Einbringen der Weichschaum-Reaktionsmischung wird das Schäumwerkzeug 9' zur Formung der schallisolierenden Verkleidung geschlossen.

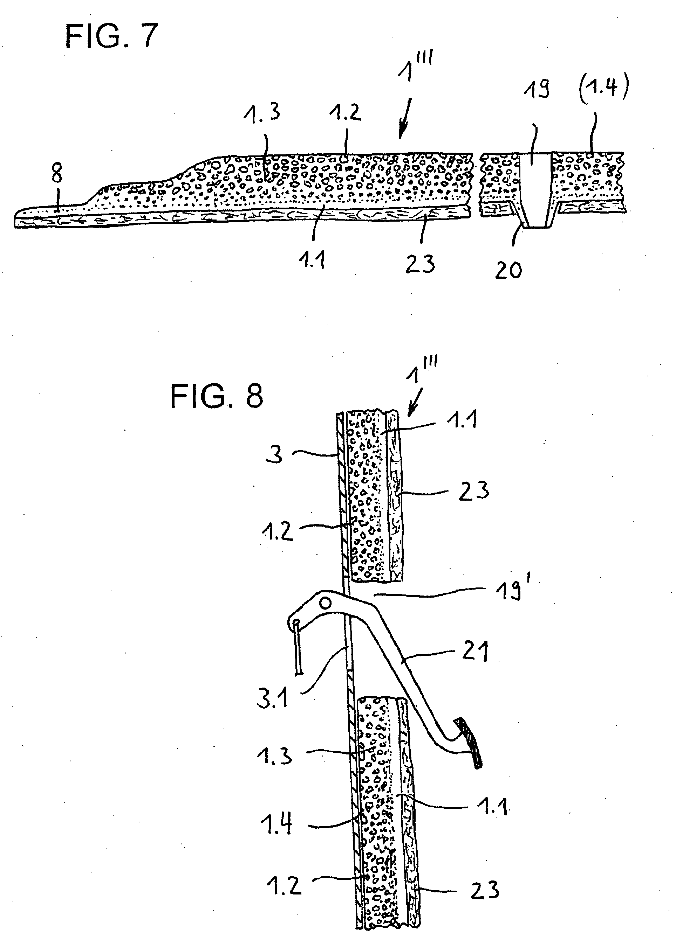

Fig. 7 zeigt ein weiteres Ausführungsbeispiel einer erfindungsgemäßen Verkleidung 1"'. Im Unterschied zu dem in Fig. 3 gezeigten Ausführungsbeispiel ist hier die integrale, im wesentlichen porenfreie Haut 1.1 außenseitig vollflächig oder nur partiell, und zwar in gezielt ausgewählten Bereichen, mit einer Abdeckschicht 23 versehen. Die Abdeckschicht 23 ist akustisch wirksam. Sie kann aus einem dünnen Abdeckvlies (Faservlies) bestehen, das der Verkleidung 1"' ein schöneres Aussehen und/oder eine höhere mechanische Festigkeit, insbesondere Reißfestigkeit verleiht. Das Abdeckvlies 23 besitzt beispielsweise ein Flächengewicht im Bereich 20 g/m² bis 250 g/m².

Alternativ kann die Abdeckschicht 23 aus einem schallabsorbierenden Volumenvlies bestehen, das ein Flächengewicht im Bereich von 200 bis 700 g/m², insbesondere 200 bis 500 g/m² und eine Schichtdicke im Bereich von 5 bis 20 mm, insbesondere 5 mm bis 10 mm aufweist.

Das Abdeckvlies oder Volumenvlies ist beispielsweise aus Polyesterfasern, Baumwolle oder anderen Natur- oder Synthesefasern gebildet.

Ferner kann die Abdeckschicht 23 auch aus einer Kunststofffolie, insbesondere einer Schaumstofffolie bestehen. Die Abdeckschicht 23 kann dabei insbesondere als Sperrschicht fungieren.

Bei dem in Fig. 8 dargestellten Ausführungsbeispiel ist die integrale, im wesentlichen porenfreie Haut 1.1 des geschäumten Formteils ebenfalls mit einer Abdeckschicht 23 versehen.

Die integrale Haut 1.1 ist mit der Abdeckschicht 23 stoffschlüssig verbunden. Die stoffschlüssige Verbindung wird hergestellt, indem in ein Schäumwerkzeug gemäß Fig. 5 oder 6 ein Materialbahnabschnitt oder Zuschnitt einer Folie bzw. eines Faservlieses eingelegt wird, und zwar an den Oberflächenbereich 17 des Schäumwerkzeuges, an welchem die integrale, im wesentlichen porenfreie Haut 1.1 des geschäumten Formteils erzeugbar ist. Sodann wird die Folie bzw. das Faservlies mit der Polyol und Isocyanat enthaltenden Reaktionsmischung hinterspritzt, wobei das Schäumwerkzeug 9, 9' - wie oben beschrieben - bereichsweise unterschiedlich temperiert wird.

Die Ausführung der Erfindung ist nicht auf die vorstehend beschriebenen Ausführungsbeispiele beschränkt. Vielmehr sind verschiedene Varianten denkbar. So kann die erfindungsgemäße Verkleidung 1, 1', 1" oder 1"' beispielsweise auch mehrere partielle Schalldämmbereiche, d.h. mehrere integrale, voneinander beabstandete, im wesentlichen porenfreie, luftundurchlässige Hautbereiche 1.1 aufweisen, die auf der Verkleidung 1, 1', 1" oder 1"' entsprechend den akustischen Anforderungen an die Schalldämmung gezielt angeordnet sind.

Es versteht sich, dass die Ausführung des erfindungsgemäßen Verfahrens nicht auf die oben beschriebene relative Kühlung der unteren Formhälfte 9.1 gegenüber der oberen Formhälfte 9.2 beschränkt ist. Es liegt ebenso im Rahmen der Erfindung, zur Ausbildung einer integralen, im wesentlichen porenfreien Haut an der Werkzeugoberfläche der oberen Formhälfte gegebenenfalls die Werkzeugoberfläche der oberen Formhälfte gegenüber der Werkzeugoberfläche der unteren Formhälfte zu kühlen bzw. entsprechend zu temperieren. Auch kann die Reaktionsmischung gegebenenfalls über einen in der unteren Formhälfte ausgebildeten Zufuhrkanal in die Werkzeugkavität eingeschossen werden.

## Patentansprüche

1. Verfahren zur Herstellung einer leichten, schallisolierenden Verkleidung (1, 1', 1", 1"') für ein Karosserieteil eines Kraftfahrzeuges, insbesondere einer leichten Stirnwandverkleidung, bei dem die Verkleidung (1, 1', 1", 1"') als geschäumtes, schallabsorbierendes Formteil in einem einstufigen Arbeitsgang durch Einspritzen einer Polyol und Isocyanat enthaltenden Reaktionsmischung in eine Kavität (11) eines Schäumwerkzeuges (9) erzeugt wird, wobei vor und/oder während des Einspritzens mindestens ein vorbestimmter, die Kavität (11) begrenzender Oberflächenbereich (17) des Schäumwerkzeuges (9) so temperiert wird, dass das geschäumte Formteil auf einer Seite eine integrale, im wesentlichen porenfreie Haut (1.1) mit einer Dicke von mindestens 0,5 mm aufweist und auf seiner, der besagten Haut (1.1) gegenüberliegenden Seite eine offenporige Oberfläche (1.2) und/oder dünnere, schalldurchlässige Haut (1.4) aufweist.

2. Verfahren nach Anspruch 1,
**dadurch gekennzeichnet, dass** der mindestens eine Oberflächenbereich (17) des Schäumwerkzeuges (9), an welchem die integrale, im wesentlichen porenfreie Haut (1.1) des geschäumten Formteils erzeugbar ist, auf eine Temperatur im Bereich von 15°C bis 60°C gekühlt wird.

3. Verfahren nach Anspruch 1 oder 2,
**dadurch gekennzeichnet, dass** der Oberflächenbereich (16) des Schäumwerkzeuges (9), an welchem die offenporige Oberfläche (1.2) und/oder dünnere, schalldurchlässige Haut (1.4) erzeugbar ist, auf eine Temperatur im Bereich von 50°C bis 90°C temperiert wird.

4. Verfahren nach einem der Ansprüche 1 bis 3,
**dadurch gekennzeichnet, dass** das Schäumwerkzeug (9) so temperiert wird, dass zwischen dessen Oberflächenbereich (17), an welchem die integrale, im wesentlichen porenfreie Haut (1.1) des geschäumten Formteils erzeugbar ist, und dessen Oberflächenbereich (16), an welchem die offenporige Oberfläche (1.2) und/oder dünnere, schalldurchlässige Haut (1.4) erzeugbar ist, eine Temperaturdifferenz von mindestens 15°C, vorzugsweise mindestens 25°C herrscht.

5. Verfahren nach einem der Ansprüche 1 bis 4,
**dadurch gekennzeichnet, dass** der aus Polyol und Isocyanat gebildeten Reaktionsmischung vor dem Einspritzen in das Schäumwerkzeug (9) Füllstoff zugegeben wird.

6. Verfahren nach Anspruch 5,
**dadurch gekennzeichnet, dass** der Reaktionsmischung Bariumsulfat und/oder Calciumcarbonat als Füllstoff zugegeben wird.

7. Verfahren nach Anspruch 5 oder 6,
**dadurch gekennzeichnet, dass** dem Füllstoff Kohlendioxid zugegeben wird.

8. Verfahren nach einem der Ansprüche 1 bis 7,
**dadurch gekennzeichnet, dass** als Schäumwerkzeug (9) ein Schäumwerkzeug verwendet wird, das mindestens einen in der Kavität angeordneten Vorsprung (22) aufweist, der beim Einspritzen der Reaktionsmischung einen Durchbruch (19') in dem entstehenden Formteil definiert, wobei der mindestens eine Oberflächenbereich (17) des Schäumwerkzeuges, an welchem die integrale, im wesentlichen porenfreie Haut (1.1) des Formteils erzeugbar ist, den Vorsprung (22) mit Abstand umschließt.

9. Verfahren nach einem der Ansprüche 1 bis 8,
**dadurch gekennzeichnet, dass** das als Schäumwerkzeug (9) ein Schäumwerkzeug verwendet wird, das mehrere gekühlte, voneinander beabstandete Oberflächenbereiche aufweist, so dass das geschäumte Formteil mit mehreren integralen, voneinander beabstandeten, im wesentlichen porenfreien Hautbereichen erzeugt wird.

10. Verfahren nach einem der Ansprüche 1 bis 9,
**dadurch gekennzeichnet, dass** in das Schäumwerkzeug (9) ein Materialbahnabschnitt oder Zuschnitt einer Kunststofffolie, insbesondere einer Schaumstofffolie, oder eines Faservlieses, insbesondere eines Volumenvlieses an den mindestens einen Oberflächenbereich (17), an welchem die integrale, im wesentlichen porenfreie Haut (1.1) des geschäumten Formteils erzeugbar ist, eingelegt und mit der Polyol und Isocyanat enthaltenden Reaktionsmischung hinterspritzt wird.

11. Leichte, schallisolierende Verkleidung (1, 1', 1", 1"') für ein Karosserieteil eines Kraftfahrzeuges, insbesondere in Form einer leichten Stirnwandverkleidung, im wesentlichen bestehend aus einem in einem einstufigen Prozess geschäumten, schallabsorbierenden Formteil aus offenzelligem Polyurethan-Weichschaum, welches auf seiner einen Seite eine integrale, im wesentlichen porenfreie Haut (1.1) mit einer Dicke von mindestens 0,5 mm aufweist und auf seiner, der besagten Haut (1.1) gegenüberliegenden Seite eine offenporige Oberfläche (1.2) und/oder dünnere, schalldurchlässige Haut (1.4) aufweist.

12. Verkleidung nach Anspruch 11,
**dadurch gekennzeichnet, dass** sie mindestens einen Durchbruch (19') aufweist, wobei ein Ende des Durchbruchs (19') mit Abstand von der integralen, im wesentlichen porenfreien Haut (1.1) umgeben ist und zwischen dieser Haut (1.1) und dem Durchbruch (19') eine offenporige Oberfläche (1.2') und/oder dünnere, schalldurchlässige Haut (1.4') ausgebildet ist.

13. Verkleidung nach Anspruch 11 oder 12,
**dadurch gekennzeichnet, dass** sie mehrere integrale, voneinander beabstandete, im wesentlichen porenfreie Hautbereiche aufweist.

14. Verkleidung nach einem der Ansprüche 11 bis 13,
**dadurch gekennzeichnet, dass** die integrale, im wesentlichen porenfreie Haut (1.1) eine Dicke von mindestens 1 mm und/oder eine Rohdichte im Bereich von 0,08 bis 2,0 g/cm³, vorzugsweise im Bereich von 0,08 bis 1,4 g/cm³ aufweist.

15. Verkleidung nach einem der Ansprüche 11 bis 14,
**dadurch gekennzeichnet, dass** ihr Gesamtflächengewicht weniger als 900 g/m² beträgt.

16. Verkleidung nach einem der Ansprüche 11 bis 15,
**dadurch gekennzeichnet, dass** deren offenporiger, schallabsorbierender Anteil (1.3) eine Rohdichte im Bereich von 0,02 bis 0,06 g/cm³ aufweist.

17. Verkleidung nach einem der Ansprüche 11 bis 16,
**dadurch gekennzeichnet, dass** deren schalldurchlässige Haut (1.4) eine Dicke von weniger als 400 µm, vorzugsweise von weniger als 250 µm aufweist.

18. Verkleidung nach einem der Ansprüche 11 bis 17,
**dadurch gekennzeichnet, dass** sie einstückig ausgebildet ist.

19. Verkleidung nach einem der Ansprüche 11 bis 18,
**dadurch gekennzeichnet, dass** deren integrale, im wesentlichen porenfreie Haut (1.1) partiell oder vollflächig mit einer aus einer Kunststofffolie, insbesondere Schaumstofffolie, oder
einem Faservlies, insbesondere Volumenvlies bestehenden Abdeckschicht (23) versehen ist, wobei die integrale Haut (1.1) durch Hinterspritzen der Abdeckschicht (23) mit dieser stoffschlüssig verbunden ist, wobei das Faservlies vorzugsweise ein Flächengewicht von 20 bis 150 g/m² aufweist oder als Volumenvlies vorzugsweise ein Flächengewicht von 200 bis 700 g/m² und/oder eine Dicke von 5 bis 20 mm aufweist.

## Claims

1. A method for producing a lightweight, sound insulating covering (1, 1', 1", 1"') for a body component of a motor vehicle, in particular a lightweight dashboard covering, wherein the covering (1, 1', 1", 1"') is produced as a foamed, sound absorbing molded part in a single-stage operation by injecting a reactive mix, comprising polyol and isocyanate, into a cavity (11) of a foaming tool (9), wherein before and/or during the injecting, at least one predetermined surface portion (17), defining the cavity (11) of the foaming tool (9), is temperature-controlled in such a manner that the foamed molded part comprises an integral substantially pore free skin (1.1) with a thickness of at least 0.5 mm on one side, and comprises an open porous surface (1.2) and/or a thinner, sound permeable skin (1.4) on its side opposite to said skin (1.1).

2. A method according to claim 1, **characterized in that** the at least one surface portion (17) of the foaming tool (9), where the integral, substantially pore free skin (1.1) of the foamed molded part can be produced, is cooled to a temperature in the range of 15°C to 60°C.

3. A method according to claim 1 or 2, **characterized in that** the surface portion (16) of the foaming tool (9), at which the open porous surface (1.2) and/or the thinner sound permeable skin (1.4) can be produced, is temperature-controlled to a temperature in the range of 50°C to 90°C.

4. A method according to one of the claims 1 through 3, **characterized in that** the foaming tool (9) is temperature-controlled in such a manner that between its surface portion (17), at which the integral, substantially pore free skin (1.1) of the foamed molded part can be produced, and its surface portion (16), at which the open porous surface (1.2) and/or the thinner sound permeable skin (1.4) can be produced, a temperature difference of at least 15°C, preferably 25°C, exists.

5. A method according to one of the claims 1 through 4, **characterized in that** filler material is added to the reactive mix formed from polyol and isocyanate before injecting it into the foaming tool.

6. A method according to claim 5, **characterized in that** barium sulfate and/or calcium carbonate are added to the reactive mix as filler material.

7. A method according to claim 5 or 6, **characterized in that** carbon dioxide is added to the filler material.

8. A method according to one of the claims 1 through 7, **characterized in that** as a foaming tool (9) a foaming tool is used which comprises at least one protrusion (22) disposed in the cavity, wherein said protrusion defines an opening (19') in the molded part produced when the reactive mix is injected, wherein the at least one surface portion (17) of the foaming tool, at which the integral, substantially pore free skin (1.1) of the molded part can be produced, surrounds the protrusion (22) at a distance.

9. A method according to one of the claims 1 through 8, **characterized in that** as a foaming tool (9) a foaming tool is used which comprises several cooled surface portions, offset from one another, so that the foamed molded part is produced with several integral skin portions, offset from one another, which are substantially pore free.

10. A method according to one of the claims 1 though 9, **characterized in that** a material web section or a plastic foil blank, in particular a foam foil blank or a fibrous fleece blank, in particular a volume fleece blank, is inserted into the foaming tool (9) at the at least one surface portion (17) at which the integral, substantially pore free skin (1.1) of the foamed molded component can be produced, and injected from behind with the reactive mix, comprising polyol and isocyanate.

11. A lightweight, sound insulating covering (1, 1', 1", 1"') for a body component of a motor vehicle, in particular provided in the form of a lightweight dashboard covering, substantially comprised of a sound absorbing molded part, foamed in a one-step process, made of a soft open cell polyurethane foam, which comprises an integral, substantially pore free skin (1.1) with a thickness of at least 0.5 mm on one side, and which comprises an open porous surface (1.2) and/or a thinner sound permeable skin (1.4) on its side opposite to said skin (1.1).

12. A covering according to claim 11, **characterized in that** it comprises at least one opening (19'), wherein an end of the opening (19') is surrounded at a distance by the integral, substantially pore free skin (1.1), and an open porous surface (1.2') and/or a thinner sound permeable skin (1.4') is configured between said skin (1.1) and the opening (19').

13. A covering according to claim 11 or 12, **characterized in that** it comprises plural integral skin portions offset from one another and substantially pore free.

14. A covering according to one of the claims 11 through 13, **characterized in that** the integral, substantially pore free skin (1.1) has a thickness of at least 1 mm and/or a raw density in the range of 0.08 to 2.0 g/cm³, preferably in the range 0.08 to 1.4 g/cm³.

15. A covering according to one of the claims 11 through 14, **characterized in that** its total mass per unit area is less than 900 g/m².

16. A covering according to one of the claims 11 through 15, **characterized in that** its open porous sound absorbing portion (1.3) has a raw density in the range of 0.02 to 0.06 g/cm³.

17. A covering according to one of the claims 11 through 16, **characterized in that** the sound permeable skin (1.4) thereof has a thickness of less than 400 µm, preferably less than 250 µm.

18. A covering according to one of the claims 11 through 17, **characterized in that** the covering is configured in one piece.

19. A covering according to one of the claims 11 through 18, **characterized in that** the integral, substantially pore free skin (1.1) thereof is provided partially or on its entire surface with a cover layer (23) consisting of a plastic foil, in particular foam material foil, or a fibrous fleece material, in particular a volume fleece material, wherein the integral skin (1.1) is bonded to the cover layer (23) through injecting from behind, wherein the fibrous fleece material has preferably a weight per unit area of 20 to 150 g/m² or as volume fleece has preferably a weight per unit area of 200 to 700 g/m² and/or a thickness of 5 to 20 mm.

## Revendications

1. Procédé pour la fabrication d'un revêtement d'absorption phonique léger (1, 1', 1", 1"') pour un élément de carrosserie d'un véhicule automobile, en particulier d'un revêtement léger de paroi frontale, dans lequel, au cours d'un processus à une étape, le revêtement (1, 1', 1", 1"') est fabriqué, en tant que pièce moulée expansée d'isolation acoustique, par injection d'un mélange de réaction contenant du polyol et de l'iso-cyanate, dans une cavité (11) d'un moule de moussage (9), au moins une zone prédéterminée (17) de la surface du moule de moussage (9), qui limite la cavité (11), étant tempérée de sorte que la pièce moulée expansée présente, sur une face, une peau (1.1) d'une pièce, sensiblement exempte de pores, d'une épaisseur d'au moins 0,5 mm, et, sur son autre face, opposée à ladite peau (1.1), une surface à pores ouverts (1.2) et / ou une peau (1.4) plus mince, perméable aux bruits.

2. Procédé selon la revendication 1, **caractérisé en ce que** la zone (17) de la surface du moule de moussage (9), contre laquelle la peau d'une pièce, sensiblement exempte de pores (1.1) de la pièce moulée expansée est réalisable, est refroidie à une température située dans une plage de 15 °C à 60 °C.

3. Procédé selon revendication 1 ou 2, **caractérisé en ce que** la zone (16) de la surface du moule de moussage (9), contre laquelle la surface à pores ouverts (1.2) et / ou la peau (1.4) plus mince, perméable aux bruits, peuvent être fabriquées, est mise à une température située dans une plage de 50 °C à 90 °C.

4. Procédé selon l'une des revendications 1 à 3, **caractérisé en ce que** le moule de moussage (9) est tempéré de sorte qu'il existe, entre la zone (17) de sa surface, contre laquelle la peau d'une pièce, sensiblement exempte de pores (1.1) est réalisée, et la zone (16) de sa surface, contre laquelle la surface à pores ouverts (1.2) et / ou la peau (1.4) plus mince, perméable aux bruits, sont réalisées, un différence de température d'au moins 15 °C, de préférence d'au moins 25 °C

5. Procédé selon l'une des revendications 1 à 4, **caractérisé en ce qu'**avant l'injection dans le moule de moussage (9), une matière de charge est ajoutée au mélange de réaction, contenant du polyol et de l'iso-cyanate.

6. Procédé selon la revendication 5, **caractérisé en ce que** du sulfate de baryum et / ou du carbonate de calcium sont ajoutés au mélange de réaction, en tant que matière de charge.

7. Procédé selon revendication 5 ou 6, **caractérisé en ce que** du dioxyde de carbone est ajouté à la matière de charge.

8. Procédé selon l'une des revendications 1 à 7, **caractérisé en ce que**, comme moule de moussage (9), on utilise un moule de moussage présentant au moins une saillie (22), qui, placée dans la cavité, définit, lors de l'injection du mélange de réaction, un orifice (19') dans la pièce moulée, au moins une zone (17) de la surface du moule de moussage, contre laquelle la peau d'une pièce, sensiblement exempte de pores (1.1) du produit moulé est réalisable, entoure la saillie (22), à distance de celle-ci.

9. Procédé selon l'une des revendications 1 à 8, **caractérisé en ce que**, comme moule de moussage (9), on utilise un moule de moussage présentant plusieurs zones de surface refroidies, distancées les unes des autres, de sorte que la pièce moulée expansée, produite présente plusieurs zones de peau d'une pièce, sensiblement exempte de pores, qui sont situées à distance les unes des autres.

10. Procédé selon l'une des revendications 1 à 9, **caractérisé en ce que**, dans le moule de moussage (9), sont placées une portion de matière en bande ou une découpe de film plastique, en particulier d'un film de mousse, ou d'un non-tissé en fibres, en particulier d'un non tissé volumineux, sur au moins la zone (17) de la surface, contre laquelle la peau d'une pièce, sensiblement exempte de pores (1.1) de la pièce moulée expansée est réalisée, et est surmoulée avec le mélange de réaction contenant du polyol et de l'iso-cyanate.

11. Revêtement d'absorption phonique léger (1, 1', 1", 1"') pour un élément de carrosserie d'un véhicule automobile, en particulier d'un revêtement de paroi frontale consistant essentiellement en une pièce moulée expansée d'isolation acoustique en mousse souple de polyuréthane à alvéoles ouvertes, qui présente, sur l'une de ses faces, une peau d'une pièce sensiblement exempte de pores (1.1), d'une épaisseur d'au moins 0,5 mm, et, sur son autre face, opposée à ladite peau (1.1), une surface à pores ouverts (1.2) et / ou une peau (1.4) plus mince, perméable aux bruits.

12. Revêtement selon la revendication 11, **caractérisé en ce qu'**il présente au moins un orifice (19'), une extrémité dudit orifice (19') étant entourée par la peau d'une pièce, sensiblement exempte de pores (1.1), en étant distancée de celle-ci, et une surface à pores ouverts (1.2') et / ou une peau (1.4') plus mince, perméable aux bruits étant formées entre cette peau (1.1) et l'orifice (19').

13. Revêtement selon revendication 11 ou 12, **caractérisé en ce qu'**il présente plusieurs zones de peau d'une pièce, sensiblement exempte de pores, qui sont situées à distance les unes des autres.

14. Revêtement selon l'une des revendications 11 à 13, **caractérisé en ce que** la peau d'une pièce, sensiblement exempte de pores (1.1) présente une épaisseur d'au moins 1 mm et / ou une densité apparente, qui est située dans une plage de 0,08 à 2,0 g/ cm³, de préférence dans une plage de 0,08 à 1,4 g/ cm³.

15. Revêtement selon l'une des revendications 11 à 14, **caractérisé en ce que** sa masse totale est inférieure à 900 g/ m².

16. Revêtement selon l'une des revendications 11 à 15, **caractérisé en ce que** sa partie à pores ouverts, absorbant les bruits (1.3) présente une densité apparente, qui est située dans une plage de 0,02 à 0,06 g/cm³.

17. Revêtement selon l'une des revendications 11 à 16, **caractérisé en ce que** sa peau perméable aux bruits (1.4) présente une épaisseur inférieure à 400 µm, de préférence inférieure à 250 µm.

18. Revêtement selon l'une des revendications 11 à 17, **caractérisé en ce qu'**il est formé d'une pièce.

19. Revêtement selon l'une des revendications 11 à 18, **caractérisé en ce que** sa peau d'une pièce, sensiblement exempte de pores (1.1) est pourvue partiellement ou sur toute sa surface d'une couverture (23) en une feuille de matière synthétique, en particulier de matière expansée, ou de non-tissé, en particulier de non-tissé volumineux, la peau d'une pièce (1.1) étant reliée par fusion de matière à la couverture (23), par surmoulage par injection de celle-ci, le non-tissé de fibres présentant une masse de 20 à 150 g/m² ou, en tant que non-tissé expansé, une masse située, de préférence, entre 200 et 700 g/m² et / ou une épaisseur de 5 à 20 mm.
